# EUROPEAN PATENT APPLICATION

(11) **EP 4 273 196 A2**
(43) Date of publication of application: **08.11.2023**
(21) Application number: 23186762.3
(22) Date of filing: 24.06.2021
(51) Int. Cl.: C08L 91/06

(54) **CATIONIC STABILIZATION**

(30) Priority: 24.06.2020 FR 2006617
(62) Divisional of application: 21735930.6
(71) Applicant: ARKEMA FRANCE, 92700 Colombes (FR)
(72) Inventor: HOEKMAN, Leendert Cornelis, 4389 PD Vlissingen Oost (NL)
(74) Representative: Arkema Patent

(57) **Abstract**

The present invention relates to a composition comprising a wax, a cationic surfactant, and an acid, wherein the molar ratio between the acid and the cationic surfactant is more than 1.

## Description

### [Field of the invention]

The present invention relates to a composition comprising a wax, a cationic surfactant, and an acid, wherein the molar ratio between the acid and the cationic surfactant is more than 1.

More particularly the present invention relates to the use of a cationic wax dispersion for improving the external surface protection of glass containers and a process for bringing scratch protection for returnable glass containers.

### [Technical problem]

Hollow glass containers are produced from molten glass in molds at high temperatures. As the surface of these containers is fragile and in order to preserve the strength of the glass and to prevent any direct glass-to-glass contact of the respective containers to avoid damage, they are directly surface coated after forming of the container.

Indeed, in the industry of glass containers, for example glass packaging containers, coatings are applied to improve and maintain their quality. Without coating, the glass articles can be easily damaged already during the manufacturing process, and this affects the appearance and weakens the glass articles.

Such a coating includes tin or titanium or other heat decomposable metallic or organometallic based compounds. This is the basis of the coating needed for protection of the glass container surface from damage such as abrasions and scratches, which result in a loss of strength for the glass container. The need for high tensile strength in a glass container is particularly acute when containers are mass-produced, and thus move rapidly in close proximity along high speed conveyor lines.

Nowadays, in glass container manufacturing, a two-step coating process is implemented in order to obtain scratch resistance and slipperiness of the glass containers. So, the glass containers typically receive two surface coatings, one at the hot end, just before annealing and one at the cold end just after annealing.

In the first step, the so-called hot-end coating (HEC) is applied by means of chemical vapor deposition (CVD) of a metal containing compound on the freshly formed, hot, and single or double line positioned glass containers. This first step is normally carried out at a temperature ranging from 450°C to 650°C and conduct to a thin layer of metal oxide.

In a second step, the so-called cold end coating (CEC) is applied, usually by spraying means, in form of an aqueous dispersion, when the glass containers have cooled down to a temperature of approximately 100°C. Usually, partly oxidized polyethylene (PE) wax dispersions are applied. With this additional coating on glass containers surface, a long-lasting protection is provided, consisting in scratch resistance and prevention of scuffing of glass surfaces during filling and transportation.

Nowadays, when applying the CEC, it is common to use in an autoclave process said partly oxidized PE wax dispersions. These dispersions are dispersed in water by aid of a suitable surfactant. When done at optimum conditions, a fine dispersion of said wax is obtained. Depending on the type of surfactant, non-ionic or ionic type of dispersion is obtained. Non-ionic type surfactant is commonly used, often ethoxylated alcohols, to minimize effect of pH and hardness of the water used for preparing the final dilution for application.

The aqueous dispersion is delivered in concentrated form, in order to avoid useless transportation of water, and is diluted to the required concentration in the filling plant. The dispersion is strongly diluted (generally 10 to 200 times with water) and has to stay stable during the dilution and application. This is even more critical at elevated temperatures if dilution is done with warm water or heated before application.

The water quality changes around the world and the quality of the water is not the same everywhere. This implies variation of salts and ions and their respective concentration and pH of the water intended for dilution. These salts or ions can influence the stability during dilution. Therefore, it is often preconized to use demineralized water for the further dilution. This would imply a water treatment system, which is not possible all around the world. It is much more convenient to use local water from the place where the plant is located.

Another problem is, if the diluted coating composition is not stable, it can cause plug in the coating application equipment, negatively affect the application quality and might cause downtime of the plant.

An objective of the present invention is to provide a coating composition for glass containers that can be easily diluted with any kind of water and avoid the installation of a water treatment system, and is stable during and after dilution.

Another objective of the present invention is provide a process wherein any kind of water used in the industry, in particular tap water, can be used to dilute a coating composition for glass containers.

Still another objective of the present invention is to efficiently reduce downtime of coating equipment and plugs by using a stable coating composition that can be diluted with tap water.

### Brief description of the invention

Surprisingly it has been discovered that a coating composition for applying a coating on surface of glass containers comprising:
a) a wax
b) a cationic surfactant
c) an acid
wherein the molar ratio between the acid and the cationic surfactant is more than 1, solves the above mentioned problems.

### Detailed description of the invention

In a first aspect, the present invention relates to a composition comprising:
a) a wax
b) a cationic surfactant
c) an acid
wherein that the molar ratio between the acid and the cationic surfactant is more than 1.

In a second aspect, the present invention relates to a preparation process of a coating composition comprising the step of mixing a wax, with a cationic surfactant and an acid, the molar ratio between the acid and the cationic surfactant being more than 1.

In a third aspect, the present invention relates to a process of applying a coating on the surface of glass container comprising a step i) of applying the composition of the invention on a glass surface, preferably the glass surface of a container.

According to another aspect, the present invention relates to the use of the composition according to the invention, as a cold-end coating on a glass surface.

By the term "wax" it is meant an organic compound that comprises long alkyl chains, having a melting above 45°C.

By the term "dispersion", it is meant a colloidal system with a continuous liquid phase and a discontinuous second phase that is distributed throughout the continuous phase. After the application of the coating material the continuous liquid phase evaporates and the discontinuous phase forms the coating.

By "any kind water" it is meant water that can contain high concentration of salts. Preferably, the water is tap water.

By the term "surfactant", it is meant a surface active agent, which exhibits some superficial or interfacial activity.

By saying that a range is from x to y in the present invention, it is meant that the upper and lower limit of this range are included, equivalent to at least x and up to y.

The composition of the invention is preferably a coating composition, in particular a coating composition for applying to a glass surface, in particular the glass surface of a container.

Preferably, the composition of the invention is an aqueous dispersion.

The wax of the composition is chosen among natural and synthetic waxes or mixtures thereof.

The waxes can be pure or mixed with one or several oils.

Natural waxes are chosen among fatty acids alkyl esters wherein the alcohol is a primary one and mixture thereof. Preferably, the natural wax is a Carnauba or a Candelilla wax or mixture thereof.

Preferably, the synthetic wax is chosen from the group consisting of partly oxidized polyethylene waxes having an acid number ranging from 1 mg KOH/g to 50 mg KOH/g, preferably from 10 mg KOH/g to 30 mg KOH/g, and even more preferably having an acid number of 20 mg KOH/g.

When the composition of the invention is a concentrated aqueous dispersion, it can comprise from 5 to 25 wt%, preferably from 8 to 25 wt%, more preferably from 8 to 20 wt% and even more preferably from 10 to 15 wt% of wax relative to the total composition weight.

When the composition of the invention is a coating dilution, it comprises between 0.05wt% and 1wt% of wax, preferably between 0.2 wt% and 0.5wt% of wax relative to the total weight of the composition.

By the term "cationic surfactant" it is meant the cationic surfactant itself or its precursor that can transformed by generation of a cation in the surfactant. Preferably, the cationic character of the surfactant is created by contacting the amine precursor with an acid.

Preferably, the cationic surfactant (or its precursor) presents the formula (1): 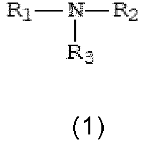 Wherein:
- at least one of R₁, R₂ or R₃ represents an alkyl group, linear or branched, optionally ethoxylated,
- at least one of R₁, R₂ or R₃ represents an hydrogen atom.
- optionally, one of R₁, R₂ or R₃ represents an alkyl amine group, ethoxylated or not.
Preferably, the alkyl group comprises between 1 and 35 carbon atoms, preferably between 12 to 26 carbon atoms, more preferably between 14 and 22 carbon atoms, and even more preferably 16 carbon atoms.

Preferably, when the alkyl group is ethoxylated, it contains at most 5 ethoxylations, most preferably has 2 ethoxylations.

Preferably, the alkyl amine group comprises between 1 and 35 carbon atoms, preferably between 12 to 26 carbon atoms, more preferably between 14 and 22 carbon atoms, and even more preferably 16 carbon atoms.

Preferably, when the alkyl amine group is ethoxylated, it contains at most 5 ethoxylations, most preferably has 2 ethoxylations.

Cationic surfactants are preferably chosen in the group consisting of mono alkyl amine, di alkyl amine, ethoxylated alkyl amine and alkyl diamines (such as Dinoram O^{®} and Dinoram SO from CECA).

When the composition of the invention is a concentrated aqueous dispersion, it can comprise from 1 to 15 wt%, preferably from 2 to 10 wt%, more preferably from 3 to 6 wt% of cationic surfactant relative to the total composition weight.

When the composition of the invention is a coating dilution, it can comprise from 0.005 to 1.5 wt%, preferably from 0.01 to 1 wt%, more preferably from 0.015 to 0.6 wt% of cationic surfactant relative to the total composition weight.

The acid of the coating composition is a Brönsted acid having the general formula HA, i.e. an acid that can release a proton (H⁺).

The acid can be a mineral acid or an organic acid.

Preferably, the acid is chosen from the group consisting of hydrochloric acid, sulphuric acid, formic acid, acetic acid, propionic acid, butyric acid, malonic acid, itaconic acid and fumaric acid.

Preferably, the mineral acid is chosen from the group consisting of hydrochloric acid and sulphuric acid.

Preferably, the organic acid comprises at most 12 carbon atoms, preferably at most 10 carbon atoms, more preferably at most 6 carbon atoms, more preferably comprises at most 4 carbon atoms, and even more preferably comprises at most 3 carbon atoms.

Preferably, the organic acid is chosen from the group consisting of formic acid, acetic acid, propionic acid, butyric acid acid, malonic acid, itaconic acid and fumaric acid, preferably is acetic acid.

The solubility of the acid in water is at least 10 g/l, preferably at least 15 g/l, more preferably at least 20 g/l.

When the composition of the invention is a concentrated aqueous dispersion, it can comprise from 1 to 15 wt%, preferably from 2 to 10 wt%, more preferably from 3 to 6 wt% of acid relative to the total composition weight.

When the composition of the invention is a coating dilution, it can comprises from 0.005 to 1.5 wt%, preferably from 0.01 to 1 wt%, more preferably from 0.015 to 0.6 wt% of acid relative to the total composition weight.

By "the molar ratio between the acid and the cationic surfactant is more than 1", it is meant that molar quantity of the acid exceeds the molar quantity of the cationic surfactant.

Preferably, the molar ratio between the acid and the cationic surfactant is at least 1.01, preferably at least 1.1, more preferably at least 1.2, more preferably at least 2, and even more preferably at least 3.

Preferably, the molar ratio between the acid and the cationic surfactant is at most 5.

Preferentially, the composition comprises one or more additional additives, preferably chosen in the group consisting of biocides, bactericides, preservatives, ester alcohol, glycol ether, dyes, emulsion destabilizers, perfumes, odorants, UV absorbers, light absorbers, impact absorbers, surfactants other than sorbitan esters, oils other than mineral oils and the like.

The composition of the invention can be a coating dilution which will be directly applied as a coating, or a concentrated aqueous dispersion that will be later diluted to obtain a coating dilution. The coating dilution may be applied to a glass article, for example a glass container.

By "concentrated aqueous dispersion", it is meant that the aqueous dispersion will be later diluted to obtain a coating dilution. The terms "concentrated aqueous dispersion is also referred hereinafter as "aqueous dispersion".

Preferably, the coating dilution comprises from 0.5 to 10 wt% of the concentrated aqueous dispersion relative to the total weight of the coating dilution. In other words, the concentrated aqueous dispersion is diluted 10 to 200 times to obtain the coating dilution.

Preferably, the composition of the invention is diluted in solvent to obtain the coating dilution. Preferably, said solvent is water, more preferably tap water. Preferably, the composition of the invention comprises between 90 and 99.5 wt% of solvent relative to the total weight of the composition.

The present invention also relates to the use of the composition according to the invention for the preparation of a coating dilution, in particular with tap water.

The present invention also relates to the use of the composition according to the invention as a coating dilution.

Still another object of the present invention is a coating dilution comprising the composition according to the invention.

Another object of the present invention is the use of the composition according to the invention, as a cold-end coating on a glass surface.

Another object of the present invention is a preparation process of a composition of the invention, comprising a step of mixing a wax, with a cationic surfactant and an acid, the molar ratio between the acid and the cationic surfactant being more than 1.

The wax, the cationic surfactant, the acid and the molar ratio are as defined above.

The wax, the cationic surfactant and the acid can be mixed altogether or in several steps. Preferably, the wax and the cationic surfactant are mixed in a first step, and the acid is then added. Alternatively, at least a part of the acid is added while mixing the wax and the cationic surfactant.

Preferably, the composition of the invention is an aqueous dispersion.

The acid can be added in one or several steps.

In one embodiment, the acid is added in one step.

In another embodiment, a part of the acid is added when the concentrated coating dispersion is prepared and a second part of the acid is added, for achieving the molar excess of the acid, afterwards, preferably during the dilution step.

The acid in excess to the surfactant can be added to the solvent, preferably to the water, used for dilution.

The present invention also pertains to a process of applying a coating on the surface of glass container comprising a step i) of applying the composition of the invention on a glass surface, preferably the glass surface of a container.

Said step i) can be made by contact between the composition of the invention and the glass surface. This contact is preferably achieved by a coating application method, preferably chosen in the group consisting of spraying, dipping and the use a coating applicator.

Preferably, said step i) is implemented on a glass surface at a temperature ranging from 10°C to 150°C. Preferably, when the step i) is applied in a filing line on a glass surface, the temperature ranges from 15°C to 70°C, most preferably between 20°C and 40°C.

Advantageously, means for applying said formulation or said coating dilution to a glass surface by spraying comprise spraying means.

According to one embodiment, means for applying said formulation or said coating dilution to a glass surface by dipping comprise a recipient containing said formulation or said coating dilution in which the containers are dipped.

The coating applicator can be a brush, capillary, sponge, fiber or the like. The coating material is applied on the surface of the glass article via the contact area between the coating applicator and the glass article surface.

Preferably, the coating process is for coating a glass container, and the coating process further comprises a previous step i') of applying a metal oxide treatment to the glass surface.

Advantageously, the metal is chosen from tin and titanium.

Another object of the present invention is a glass surface obtainable by the coating process according to the invention.

Preferably, the glass surface is a glass container, more preferably, a glass bottle.

### Examples

### Example 1

Kercoat^{®} 500 from Arkema containing 0.013 mol of acetic acid and 0.015 mol of cationic surfactant was used to prepare dilutions at a concentration of 1% (Compositions A and D), 2% (Compositions B and E) and 3% (Compositions C and F) by weight of Kercoat^{®} 500 relative to the total weight of the dilution.

In table 1, the water used for the dilution came from the tap water in Arkema's premises in Vlissingen, Netherlands. In table 2, the used water was demineralized water. The dilutions were stored at 65°C for one week and the stability was evaluated.

To evaluate the stability of the composition, the turbidity of the compositions was measured using the standard ISO 7027. The results are given in FNU (Formazin Nephelometric Units).

The results are shown in Tables 1 and 2 below:

**[Table 1]**

| Table 1 | Tap Water Arkema Vlissingen | | |
|---|---|---|---|
| | Dilution stability measurement in FNU | | |
| Days | Composition A | Composition B | Composition C |
| 0 | 21 | 38 | 51 |
| 0, 25 | **888** | **127** | 54 |
| 1 | **1300** | **1300** | 64 |
| 2 | **1300** | **1300** | 95 |
| 3 | **1300** | **1300** | **162** |
| 6 | **1300** | **1300** | **938** |
| 7 | **1300** | **1300** | **1300** |

**[Table 2]**

| Table 2 | Demineralized water | | |
|---|---|---|---|
| | Dilution stability measurement in FNU | | |
| Days | Composition D | Composition E | Composition F |
| 0 | 18 | 33 | 45 |
| 0, 25 | 18 | 33 | 43 |
| 1 | 18 | 32 | 44 |
| 2 | 17 | 31 | 42 |
| 3 | 18 | 31 | 41 |
| 6 | 19 | 33 | 42 |
| 7 | 18 | 32 | 42 |

The results show that cationic wax dispersions are not stable when diluted in tap water, contrary to what is observed when demineralized water is used.

### Example 2

Example 1 using tap water was reproduced (Compositions A to C), and the compositions were supplemented with 0.017 mol (i.e. to a total content of 0.030 mol in the composition), 0.033 mol (i.e. to a total content of 0.046 mol in the composition) and 0.050 (i.e. to a total content of 0.063 mol in the composition) of acetic acid respectively.

The results are shown in table 3 below:

**[Table 3]**

| | Dilution stability measurement in FNU | | |
|---|---|---|---|
| Days | Composition A + 0.017 mol of acetic acid | Composition B + 0.033 mol of acetic acid | Composition C + 0.050 mol of acetic acid |
| 0 | 19 | 37 | 50 |
| 1 | 21 | 34 | 45 |
| 2 | 27 | 34 | 45 |
| 3 | 27 | 34 | 45 |
| 6 | 103 | 34 | 45 |
| 7 | 461 | 34 | 45 |

A comparison of examples 1 and 3 shows a significant increase in stability of the composition when acid is present at a ratio of more than one relative to cationic surfactant.

## Claims

1. A composition comprising:
a) a wax
b) a cationic surfactant
c) an acid
wherein the molar ratio between the acid and the cationic surfactant is more than 1.

2. The composition according to claim 1, characterized that the molar ratio between the acid and the cationic surfactant is at least 1.01, preferably at least 1.1, more preferably at least 1.2, more preferably at least 2, and even more preferably at least 3.

3. The composition according to claim 1 or 2, characterized that the cationic surfactant is chosen from mono alkyl amine, di alkyl amine, ethoxylated alkyl amine and alkyl diamines.

4. The composition according to claim 1 or 2, characterized that acid is chosen from the group consisting of hydrochloric acid, sulphuric acid, formic acid, acetic acid, propionic acid, butyric acid acid, malonic acid, itaconic acid and fumaric acid.

5. The composition according to claim 1 or 2, characterized that wax is chosen from fatty acids alkyl esters wherein the alcohol is a primary one and mixture thereof, preferably, is a Carnauba or a Candelilla wax or mixture thereof.

6. The composition according to any of claims 1 to 5, characterized that the composition is in form of an aqueous dispersion.

7. The composition according to any of claims 1 to 5, comprising from 5 to 25 wt%, preferably from 8 to 25 wt%, more preferably from 8 to 20 wt% and even more preferably from 10 to 15 wt% of wax relative to the total composition weight.

8. A composition as defined in any of claims 1 to 7, comprising between 90 and 99.5 wt% of solvent relative to the total weight composition.

9. A preparation process of a coating composition, comprising a step of mixing a wax, with a cationic surfactant and an acid, the molar ratio between the acid and the cationic surfactant being more than 1.

10. A process of applying a coating on a glass surface comprising a step i) of applying the composition as defined in any of claims 1 to 8 on a glass surface, preferably the glass surface of a container.

11. The use of the composition according to any of claims 1 to 8, as a cold-end coating on a glass surface.

12. Glass surface, preferably glass container, and even more preferably glass bottle obtainable by the process as defined in claim 10.
